# EUROPEAN PATENT APPLICATION

(11) **EP 0 645 904 A1**
(43) Date of publication of application: **29.03.1995**
(21) Application number: 94910525.8
(22) Date of filing: 24.03.1994
(51) Int. Cl.: H04H 1/02

(54) **BROADCASTING COMMUNICATION SYSTEM**

(30) Priority: 24.03.1993 JP 64983/93
(71) Applicant: KABUSHIKI KAISHA TOSHIBA, Kawasaki-shi, Kanagawa-ken 210 (JP)
(72) Inventor: KOBAYASHI, Hiroshi, Tokyo 160 (JP); SEKIYA, Kunihiko, Yokohama-shi, Kanagawa-ken 241 (JP); HARUYAMA, Hideaki, Fujisawa-shi, Kanagawa-ken 251 (JP); IWASAKI, Kazunori, Yokohama-shi, Kanagawa-ken 235 (JP); NAKAJI, Toshiyuki, Tokyo 143 (JP); KOUYAMA, Susumu, Oume-shi, Tokyo 198 (JP)
(74) Representative: Henkel, Feiler, Hänzel & Partner
(86) International application number: JP9400466
(87) International publication number: WO9422244

(57) **Abstract**

Cross-connect apparatuses (102) to which a plurality of broadcasting stations (108) are connected in a tree network form by a collection system transmission line (103) consisting of optical fibers to form a collection network (100). A distribution system transmission line (104) consisting of optical fibers connects distributors (105) into a tree network form so as to form a distribution network (101), which is connected to one (102) of the cross-connect apparatuses of the collection network (100). A plurality of distribution nodes (107) are connected in a star form to the distributor (105). The distribution nodes (107) are connected to a subscriber's network, and distributes broadcasting signals transmitted from the collection network (100) to each subscriber.

## Description

### Technical Field

The present invention relates to a wide area broadcasting communication system which utilizes a wide area communication network such as a broad-band ISDN.

### Background Art

A communication network has recently been digitized on an international level. In Japan, NTT has already put a digitized communication network to practical use and started services of INS NET 64 and INS NET 1500. According to these services, a speech communication terminal, a facsimile communication terminal, a data communication terminal, and the like, which have been conventionally connected to their respective communication networks (speech communication network, facsimile communication network, data communication network), have only to be connected to a single communication network. The idea of such a communication network is called an ISDN (Integrated Services Digital Network) and results from an international standardized work which has been managed mainly by the CCITT (International Telegraphy and Telephone Consultative Committee). The ISDN is classified into an N-ISDN (Narrow-band ISDN) in which the upper limit of the capacity of the transmission line is 1.544 Mbps or 2.048 Mbps, and a B-ISDN (Broad-band ISDN) in which the upper limit of the capacity of the transmission line is 155.52 Mbps or 622.08 Mbps and which allows a motion image service.

At present, the N-ISDN is of considerably more practical use and provides various types of service, whereas a service using the B-ISDN is still in the studying stage, and there are few specific examples applicable to the B-ISDN.

The current motion image service is represented by TV broadcasting. However, this service is provided chiefly to the metropolitan area, and only some of the programs provided to the metropolitan area can be enjoyed in the local areas. Further, the TV programs produced by a broadcasting station in a local area cannot be enjoyed in the other areas. A large number of people, who come from the country and work at companies in the metropolitan area, can learn of the states of their hometowns only on the local news provided by the broadcasting stations in the metropolitan area. As described above, the current TV broadcasting does not necessarily provide the same programs throughout the country and is therefore a service in favor of the metropolitan area.

The present invention has been developed in consideration of the above situation and its object is to provide a broadcasting communication system which allows multichannel videos to be uniformly received anywhere throughout the country.

### Disclosure of the Invention

To resolve the above problem, the broadcasting communication system of the present invention comprises a collection network for collecting broadcasting signals transmitted from a plurality of broadcasting stations, and a distribution network connected to the collection network and having distribution nodes each for selecting a broadcasting signal requested by a subscriber and distributing the broadcasting signal to a subscriber network.

According to the present invention, the broadcasting signals transmitted from the broadcasting stations are collected by the collection network at once, the collected signals are distributed to all the distribution nodes through the distribution network, and the broadcasting signal requested by the subscriber is transmitted to the subscriber network. Therefore, the subscribers connected to the distribution nodes can uniformly receive all the broadcasting signals collected by the collection network.

### Brief Description of the Drawings

FIG. 1 is a block diagram of a broadcasting communication system according to a first embodiment of the present invention;
FIG. 2 is a block diagram of the broadcasting communication system according to the first embodiment, in which a collection network is formed like a ring or a loop;
FIG. 3 is a block diagram showing an example of a distribution node of a distribution network in the broadcasting communication system according to the first embodiment;
FIG. 4 is a block diagram showing an example of a video package library of the distribution node shown in FIG. 3;
FIG. 5 is a view showing an example of an information transfer format in the broadcasting communication system of the present invention;
FIGS. 6A and 6B are views showing examples of a transfer format of cells in the broadcasting communication system of the present invention;
FIG. 7 is a block diagram showing an example of a subscriber network shown in FIG. 3;
FIG. 8 is a view showing an example of the state of use of a frequency band in the subscriber network;
FIG. 9 is a view showing an example of use of channels in the present invention; and
FIG. 10 is a characteristic diagram for explaining a light wavelength multiplex in a communication network of the present invention.

### Best Mode of Carrying Out the Invention

The present invention will now be described in detail, with reference to the accompanying drawings.

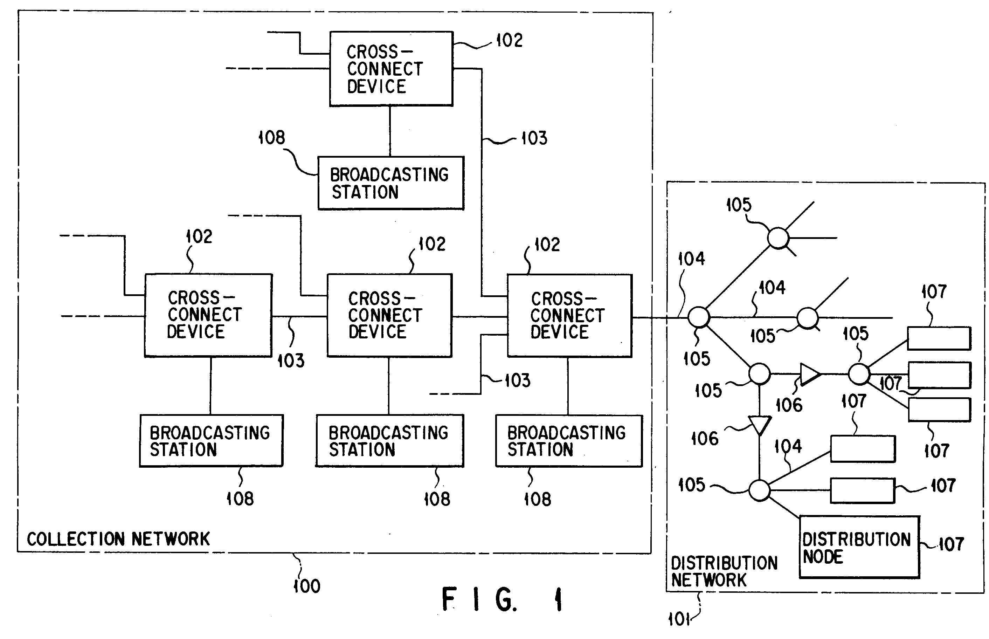

FIG. 1 is a block diagram of a broadcasting communication system according to a first embodiment of the present invention. The video information of the system contains programs of lectures at universities, private or preparatory schools to supplement schoolwork, etc. received by remote control, TV programs produced by the Government, government agencies, and municipal corporations, company broadcasts, overseas broadcasts received again, as well as TV programs presented by the public broadcasting station and the commercial broadcasting station in both the metropolitan area and local areas. A number of broadcasting stations 108, which send out these programs, are connected to a single collection network 100. A collection system transmission line 103 formed of optical fibers, is connected to be formed like a tree by using cross-connect devices 102, and the collection network 100 is constituted by the tree-like communication network. The broadcasting stations 108 dotting various places are connected to the collection system transmission line 103 through the nearby cross-connect devices 102. Here the broadcasting stations 108 are informants including a video production. The programs are not limited to the videos but contain data such as a teletext. Though the capacity of the collection system transmission line 103 can be selected arbitrarily, it is set to 10 Gbps for the following reason.

It is said that, when TV broadcasting of the current NTSC is digitally transmitted, an image of sufficiently good quality can be obtained by the transmission capacity of about 10 Mbps. Therefore, 1000 channels can be secured as TV broadcasting channels in the transmission line having a capacity of 10 Gbps. At present, the number of TV broadcasting stations does not amount to 100 throughout Japan. Consequently, the first embodiment of the present invention, which allows 1000 channels to be used, has a channel capacity enough to provide the specialized broadcasts of lectures at universities, sports, hobby, entertainment, and the like, as well as the broadcasts of all the broadcasting stations in Japan. In the United States progressing in CATV, 150 channels are served. In the first embodiment, video services corresponding to the number of channels exceeding the 150 channels can be achieved.

As regards the hardware of the system, a submarine cable has already been laid across the Pacific Ocean covering 9000 km, thereby achieving the transmission of 5 Gbps. For this reason, even if a collection system is constituted in the whole of Japan to which the present invention is directed, it can be covered with an optical transmission line of about 3000 to 4000 km. It is thus easy to set the capacity of the optical transmission line to 10 Gbps.

The information of programs produced by the respective broadcasting stations 108 or informants (which are not shown in FIG. 1 but synonym for the broadcasting stations 108) is transmitted to the collection system transmission line 103, which extends throughout the country, via a suitable cross-connect devices 102 selected from the viewpoint of economy. Therefore, the collection system transmission line 103 always transmits the program information supplied from all the broadcasting stations 108. The cross-connect devices 102 each serve as a connection device having one outgoing line corresponding to one incoming line, and have an advantage in that the device can be obtained by simpler hardware than a generally-used switching device.

The collection network 100 can be constituted by a hierarchical communication network, though not shown.

A distribution system transmission line 104 of a distribution network 101 for directly providing each subscriber with information, is connected to any one of the cross-connect devices 102 of the collection network 100. The distribution system transmission line 104 is formed of an optical fiber. The distribution network 101 is also constituted by a tree-like communication network. The distribution system transmission line 104 is formed like a tree by using distributors 105. An amplifier 106 for compensating for attenuation of signals is connected between the distributors 105 when the need arises. A plurality of distribution nodes 107 are connected to each of the distributors 105. Thus all the program information being transmitted through the collection network 100, is always caused to reach the distribution nodes 107.

Since, as described above, a network is divided into two networks of the collection and distribution systems, the distribution network can be passive, and the cost for constituting the networks can be lowered.

In the first embodiment, the collection system transmission line 103 and broadcasting stations 108 are connected by the cross-connect devices 102 having no switching functions. However, some or all of the cross-connect devices can be replaced with switching devices having switching functions.

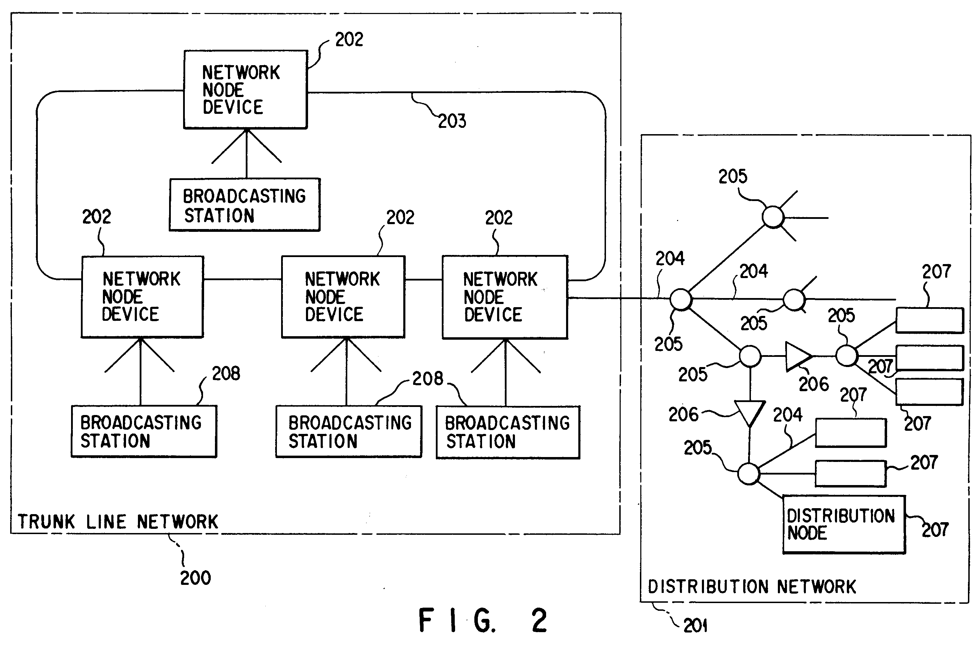

FIG. 2 is a view showing a constitution of the broadcasting communication system according to the first embodiment of the present invention, in which a ring- or loop-shaped communication network is applied to the major portion of the collection and distribution networks. The distribution network 201 is connected to a ring- or loop-shaped trunk line network 200 serving as both collection and distribution networks. Network node devices 202 are connected to form a ring or a loop by means of a transmission line 203 of optical fibers used for both the collection and distribution systems. In FIG. 1, there is one-to-one correspondence between the cross-connect devices 102 and broadcasting stations 108 and, in FIG. 2, a number of broadcasting stations 208 are connected to each of the network node devices 202. The constitution of the distribution network 201 is the same as that of the distribution network 101 shown in FIG. 1. It is advisable to take into consideration a loop-back function and a system switching function to take measures against trouble.

The difference between the ring- and loop-shaped communication networks is that, in the former network, the network node devices 202 have the same distribution function and, in the latter network, one of the devices 202 functions as a master station.

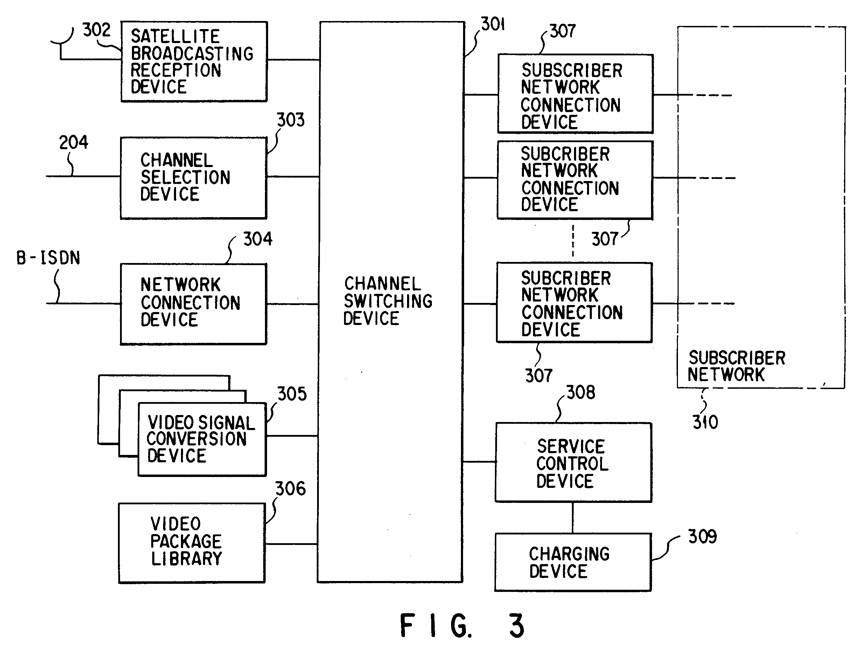

FIG. 3 is a view showing an example of a constitution of a distribution node 207 included in the distribution network of the broadcasting communication system shown in FIGS. 1 and 2. A distribution system transmission line 204 is connected to a channel switching device 301 via a channel selection device 303. A satellite antenna 312 for receiving a wave from a broadcasting satellite BS/communication satellite CS is connected to the channel switching device 301 via a satellite broadcasting reception device 302. A public network other than the system of the present invention, for example, a B-ISDN is connected to the channel switching device 301 through a network connection device 304. A video signal conversion device 305, a video package library 306, and a service control device 308 to which a charging device 309 is connected, are also connected to the channel switching device 301. A subscriber network 310 is connected to the channel switching device 301 through a subscriber network connection devices 307.

An operation of the distribution node 207 having the constitution shown in FIG. 3, will now be described. The channel switching device 301 has a switching function of distributing the programs (channels), which are supplied from the satellite broadcasting reception device 302, channel selection device 303, and network connection device 304, to the subscribers in need of the programs. The satellite broadcasting reception device 302 is a reception device of the broadcasting satellite or communication satellite which has been put to practical use, and programs of the broadcasting and communication satellites can also be supplied to the subscriber network through the channel switching device 301 when the need arises. Though, the channel selection device 303 and network connection device 304 receive programs from the distribution network and B-ISDN, respectively, they have a disadvantage in that it is difficult or impossible to receive information from the distribution network and B-ISDN when these networks are disconnected by a disaster such as an earthquake since both the networks are formed by wires on the ground. The satellite broadcasting reception device 302 is therefore provided in order to back up the networks in case of the disaster.

The channel selection device 303 is connected to the distribution system transmission line 204 and intended to select a channel required by the subscriber network from among all of 1000 channels being transmitted through the distribution network 101, under the control of the service control device 308, and send it to the channel switching device 301. The network connection device 304 is an interface interfacing with the B-ISDN for receiving various video services of the B-ISDN under consideration.

The subscriber network connection devices 307 are interfaces interfacing with the subscriber network 310 for providing the respective subscribers with information. Though the number of subscribers covering each of the devices 307 need not be particularly limited, it is set to about 50 in this embodiment. This reduction in subscribers aims at eliminating the need for inserting an amplifier in the subscriber network 310. If about ten subscriber network connection devices 307 are provided for each distribution node, then the distribution node covers about 500 subscribers. This is intended to improve in downsizing based on the Grosh's law relating to the performance evaluation of a computer and thus improve in cost performance.

The video signal conversion device 305 converts digital video signals supplied from the channel selection device 303 and network connection device 304 into analog video signals which can be sent to the subscriber network 310 when necessary. The video signal conversion device 305 has a plurality of conversion functions such that different programs can be provided to a number of subscribers at the same time. The channel switching device 301 has a hybrid conversion function of converting both digital and analog signals to each other.

The video package library 306 is a sort of videodisk device for offering popular video software packages accessed frequently by the subscribers. Since the distribution node is provided with such an accumulation device, an amount of traffic of the distribution network and B-ISDN can be decreased.

The service control device 308 fulfills the role of giving an instruction to the channel switching device 301, channel selection device 303, network connection device 304, and the like in response to a subscriber's request, and offering a program requested by the subscriber to the subscriber network. The charging device 309 is used to charge in accordance with each subscriber's request.

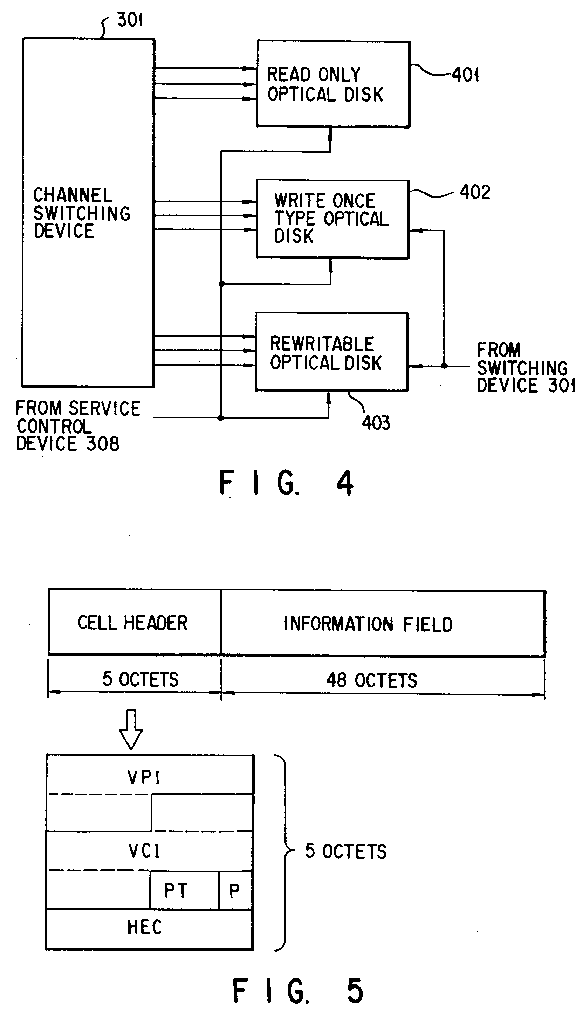

FIG. 4 is a view showing the detail of the video package library 306. The video package library comprises three optical disk devices of a read only type optical disk device 401, a write once type optical disk device 402, and a rewritable type optical disk device 403. The read only type optical disk device 401 is used to record information which is fixed and accessed with high frequency, the write once type optical disk device 402 is used to record that information recorded in the rewritable type optical disk device which is accessed with high frequency, and the rewritable type optical disk device 403 is used to store information acquired through the B-ISDN. Since these optical disk devices each need a considerably large memory capacity, it is desirable that they are a multiple optical disk device having an autochanger mechanism and capable of accessing a plurality of optical disks at the same time.

FIG. 5 is a view of an example of an information transfer format of the collection network and distribution network, showing transfer of information to the distribution node in the broadcasting communication system of the present invention. This format is adopted in the ATM (Asynchronous Transfer Mode) which is a transfer technique of the B-ISDN. Information is divided for every 48 octets (1 octet = 8 bits), and information of 48 octets with a cell header of 5 octets at the head thereof, is transferred. The cell header contains information indicative of an address which is called a VPI (Virtual Path Identifier) and a VCI (Virtual Channel Identifier), information indicative of a type of a cell which is called PT (Payload Type), information indicative of the priority of a disposal cell which is called P (Priority), and HEC (Header Error Check) for checking a transfer error in the cell header. The detailed description of the above information is omitted since the function thereof is well known from an advice of the CCITT, the TTC standard, etc. in relation to the B-ISDN. Judging from the fact that the B-ISDN is directed to the services including even a motion image service, it is evident that the same transfer format can be used in the present invention.

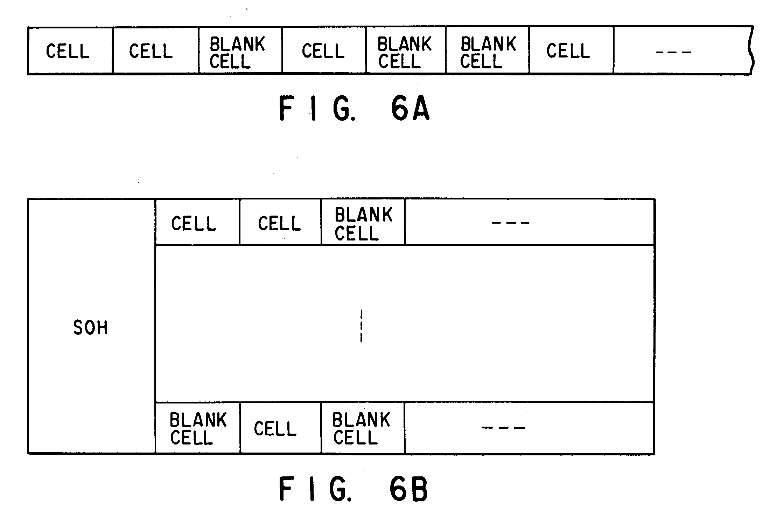

FIGS. 6A and 6B are views showing the state of transfer of cells in the ATM. FIG. 6A shows a transfer system wherein cells with information and blank cells without information, which are arranged close to one another, are transferred on the transmission line, while FIG. 6B shows another transfer system called STM-1 in which cells pushed into a synchronous format are transferred. The system shown in FIG. 6B is now under study to put it to practical use and, in the present invention, too, the cells can be transferred by using this system. In FIG. 6B, SOH (Section Over Head.) represents an information area for transmitting/receiving information of the maintenance and operation between opposing devices.

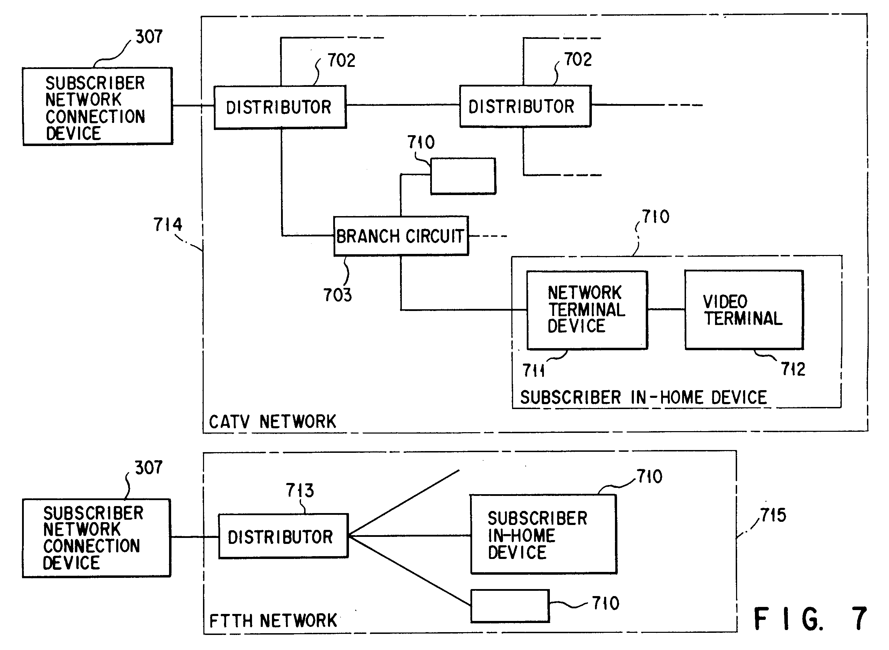

FIG. 7 shows an example of the subscriber network 310 shown in FIG. 3. FIG. 7 also shows a tree-like CATV network 714 using coaxial cables or optical fibers and an FTTH (Fiber to the Home) network 715 using optical fibers. The CATV network 714 comprises a distributor 702, a branch circuit 703, and a subscriber's in-home device 710. The subscriber's in-home device 710 includes a network terminal device 711 and a video terminal 712. The FTTH network 715 includes a distributor 713 and a subscriber's in-home device 710. The subscriber network is not limited to the tree-like network, but can be formed like a loop, a ring, or a star.

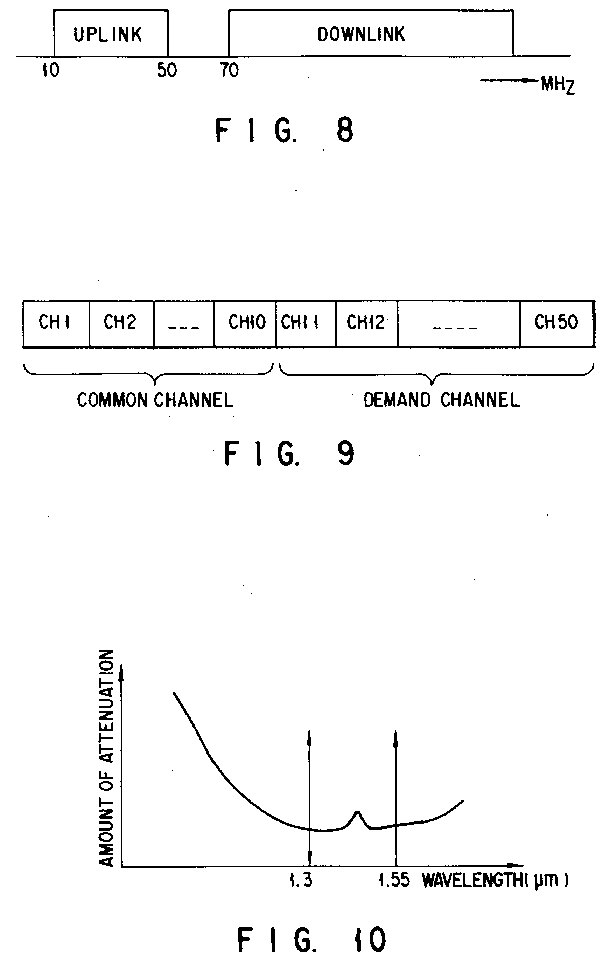

FIG. 8 shows an example of the state of use of a frequency band in the subscriber network. The band ranging from 10 to 50 MHz is used as an uplink channel, and the band not less than 70 MHz is used as a downlink channel. The uplink channel does not require the band covering 40 MHz since it is used to transfer control information such as a request for a program (channel) that a user wishes to watch or listen to. However, the 40 MHz is allotted to the uplink channel so that it can be used for two-way communication such as a telephone, a videophone, and video transmission from a subscriber, in addition to the control information. On the other hand, the downlink channel requires a large band since it is used to supply video signals to the respective subscribers. In the present TV broadcasting, channels are allotted for every 6 MHz. If the number of the channels is 50, a frequency band of 300 MHz (= 6 MHz × 50 channels) is needed and, in this case, the upper limit of the downlink channel is 370 MHz.

A subscriber's request for channels will now be described. FIG. 9 is a view showing an example of a method for using a channel. According to the example, the total number of channels to be provided is 50, and the 50 channels include 10 common channels that every user is able to watch and listen to and 40 demand channels provided in accordance with each subscriber's request. For example, the common channels are directed to channels which are visible and audible within the basic charge, and the demand channels are directed to channels whose audience rating is low; however, a charge can be added to the demand channels as in the case of a so-called pay TV. These channels include channels for causing a program broadcasted in real time to flow through the collection and distribution networks and channels for causing reproduction information of a desired video package selected by a video package device to flow therethrough.

Therefore, the demand channels need to have a function of being controlled such that only the subscriber requesting a channel can watch or listen to the channel and a subscriber not requesting a channel cannot watch or listen to the channel. This technique has already been put to practical use and includes, for example, a system wherein a video signal is scrambled and the scrambled signal is descrambled by the subscriber's in-home device.

The channel request has two cases: one case where a user wishes to watch a program immediately after the request, and the other case where a user wishes to make a reservation for a program to be broadcasted later. It is thus necessary to have two channel control systems of an immediate type for executing a channel allocation processing immediately after the request is received and an unimmediate type for executing a channel allocation processing after a lapse of a predetermined period of time.

Since the band of the downlink channel is broad but limited, it should be used effectively. Assume that, in the allocation of the demand channels, a program requested by a subscriber has been already distributed to the subscriber network through a channel. If another subscriber requests the same program, a new channel is not allotted thereto, and the latter subscriber can access the program through the same channel, with the result that the limited number of channels can be utilized effectively.

In view of the human interface, it is important to inform a subscriber of whether,a channel can be allotted (a program can be provided) in response to both the channel request of the immediate type and that of the unimmediate type.

When a channel can be provided in response to the channel request, the channel request is of a fixed reservation type for securing the channel and a temporary reservation type for temporarily securing the channel. In the temporary reservation type, if the system runs short of channels by the later request of the fixed reservation type, a reservation is likely to be canceled. It is however considered to be necessary to provide a service in which the utilization rates in the temporary reservation type are set lower than those in the fixed reservation type. If, however, a reservation is canceled in the case of the temporary reservation type as described above, a user who made the reservation has to be informed that the reservation has been canceled.

Various ideas are applied to these service ways to sufficiently satisfy a subscriber's demand for the limited number of channels is satisfied.

FIG. 10 is a view for explaining light wavelength multiplex in optical fibers in the collection and distribution networks. As is apparent from FIG. 10, it is generally known that the amount of attenuation of light is small when the wavelength of the light is in the vicinity of 1.3 µm and 1.55 µm, and a light-emitting diode having these wavelengths is selected for long-distance light transmission. Light wavelength multiplex transmission can be performed using a difference in wavelength. Using the difference in wavelength, information such as speech and data can be transferred at low speed by means of an optical signal of 1.3 µm (two-way transmission), and information such as a video signal can be transferred at high speed by means of an optical signal of 1.55 µm (one-way transmission).

An example of an application realized by utilizing the broadcasting communication system of the present invention, will now be described. First a private or preparatory school service spreading all over the country can easily be realized. The private or preparatory school service will be described, with reference to FIG. 1. The broadcasting stations 108 pick up images of lectures of a private or preparatory school, and their video signals are collected together by the collection network 100. These video signals are then transmitted to the distribution nodes 107 in various parts of the whole country through the distribution network 101. The signals are sent from the distribution nodes 107 to the video terminal (shown in FIG. 7) of every home, with the result that the private or preparatory school service can be received today without moving from the home. Needless to say, it is evident that the signals can be received by the private or preparatory school opened in the respective parts. In addition to the private or preparatory school service, various types of educational broadcast such as lectures at universities and foreign language lessons, can be realized. Further, the broadcasts produced by the TV broadcasting stations (irrespective of whether they are a key station or a local station) on the respective parts of the whole country can easily be provided throughout the country. In this case, too, these TV broadcasting stations correspond to the broadcasting stations shown in FIG. 1, and the images formed thereby are sent to the collection network via the cross-connect devices, with the result that they can be received by every home throughout the country as can be the above application. Furthermore, it is evident from the above description that the nationwide service of specialized channels for sports, movie, hobby, economy, etc., the broadcasts of public relations and assemblies of the Government and municipal corporations, and domestic broadcasts of overseas broadcasts can easily be realized.

In the above embodiment, the current NTSC is exemplified to describe the TV broadcasting. In HDTV (High Definition TV) broadcasting which is now being put to practical use, if the transmission capacity, which is about five times as large as that of the NTSC TV broadcasting, is simply allotted to each channel, the HDTV broadcasting can easily be applied to the present invention.

In the above embodiment, the video package library is connected to the distribution nodes. However, a program, which cannot be hardly accessed, can be transmitted through the B-ISDN or the collection and distribution networks by providing a plurality of distribution nodes or a single video package library in the whole system.

### Industrial Applicability

As described above in detail, according to the present invention, broadcasting signals of super-multichannels can be received in every part of the whole country, and a wide area multichannel broadcasting service, which is not provided by the conventional TV broadcasting or CATV, can be realized.

## Claims

1. A broadcasting communication system comprising:
a collection network for collecting broadcasting signals transmitted from a plurality of broadcasting stations; and
a distribution network connected to said collection network and having a distribution node for distributing broadcasting signal selected by a subscriber to a subscriber network.

2. The broadcasting communication system according to claim 1, wherein said collection network and said distribution network divide the broadcasting signals into cells having a fixed length and transmit the cells.

3. The broadcasting communication system according to claim 1, wherein said collection network is a tree-like network.

4. The broadcasting communication system according to claim 1, wherein said collection network is a ring-like network.

5. The broadcasting communication system according to claim 1, wherein said collection network is a loop-like network.

6. The broadcasting communication system according to claim 1, wherein said collection network includes a cross-connect device to which said plurality of broadcasting stations are connected.

7. The broadcasting communication system according to claim 1, wherein said distribution network is a tree-like network.

8. The broadcasting communication system according to claim 1, wherein said distribution network is a ring-like network.

9. The broadcasting communication system according to claim 1, wherein said distribution network is a loop-like network.

10. The broadcasting communication system according to claim 1, wherein said distribution network is a passive network.

11. The broadcasting communication system according to claim 1, wherein said subscriber network is a tree-like network.

12. The broadcasting communication system according to claim 1, wherein said subscriber network is a ring-like network.

13. The broadcasting communication system according to claim 1, wherein said subscriber network is a loop-like network.

14. The broadcasting communication system according to claim 1, wherein said subscriber network is a passive network.

15. The broadcasting communication system according to claim 1, wherein said subscriber network is a star-like network.

16. The broadcasting communication system according to claim 1, wherein said collection network and said distribution network transmit a digital signal, said distribution network transmits an analog signal, and said distribution node comprises means for converting the digital signal into the analog signal.

17. The broadcasting communication system according to claim 1, wherein said subscriber network divides the broadcasting signals into cells having a fixed length and transmit the cells.

18. The broadcasting communication system according to claim 1, wherein said subscriber network comprises a two-way transmission function of transmitting the broadcasting signals from the distribution node to the subscriber and transmitting a subscriber's request to the distribution node.

19. The broadcasting communication system according to claim 1, wherein each of said collection network and said distribution network comprises a first channel for transmitting a program to be provided to all subscribers and a second channel for transmitting a program to be selected in accordance with each subscriber's request.

20. The broadcasting communication system according to claim 19, wherein said second channel is allowed to be received by a subscriber requesting said second channel and unable to be received by a subscriber not requesting said second channel.

21. The broadcasting communication system according to claim 19, wherein said request has an immediate type in which the program is provided to the subscriber immediately in accordance with said request and an unimmediate type in which the program starts to be provided to the subscriber after a lapse of a predetermined period of time after said request.

22. The broadcasting communication system according to claim 19, wherein, when a subscriber makes a request for a program, if a program equal to the program is allotted to a second channel, a new channel is prevented from being allotted by the request.

23. The broadcasting communication system according to claim 19, wherein, when a subscriber makes a request for a program, if a program equal to the program is allotted to a second channel, the program is provided to the subscriber using the second channel.

24. The broadcasting communication system according to claim 21, wherein the subscriber is informed of whether a channel can be provided in accordance with a channel request of the immediate type.

25. The broadcasting communication system according to claim 21, wherein the subscriber is informed of whether a channel can be provided by scheduling allocation of channels, in accordance with a channel request of the unimmediate type.

26. The broadcasting communication system according to claim 19, wherein said request has a fixed reservation type for immediately securing a program in accordance with said request when a channel is allowed to be allotted, and a temporary reservation type for temporarily securing a program in accordance with said request, and, when said request of the temporary reservation type is made, if the fixed reservation type is made afterward, a reservation is canceled.

27. The broadcasting communication system according to claim 26, wherein, when the request of the temporary reservation type is made and the reservation is canceled, a subscriber who made the reservation is informed that the reservation was canceled.

28. The broadcasting communication system according to claim 1, wherein said broadcasting stations include a TV broadcasting station and a production for producing a video program sponsored by a program sponsor.

29. The broadcasting communication system according to claim 1, wherein each of said collection network and said distribution network is an optical fiber network.

30. The broadcasting communication system according to claim 1, wherein said distribution node comprises a channel selection device connected to said distribution network, a satellite broadcasting reception device, a network connection device connected to a B-ISDN, and a channel switching device for transmitting a signal from a video package library to the subscriber network.

31. The broadcasting communication system according to claim 30, wherein said video package library comprises a read only type optical disk device, a rewritable type optical disk device for accumulating information obtained from the B-ISDN, and a write once type optical disk device.

32. The broadcasting communication system according to claim 1, wherein said subscriber network comprises a CATV network and an FTTH network.

33. The broadcasting communication system according to claim 1, wherein each of said collection network and said distribution network comprises means for executing light wavelength multiplex communication.

34. A broadcasting station connected to a broadcasting communication system for transmitting a broadcasting signal, the broadcasting communication system comprising:
a collection network for collecting broadcasting signals transmitted from a plurality of broadcasting stations;
a distribution network for distributing the broadcasting signals collected by said collection network;
a distribution node for selecting and transmitting one of a subscriber requested broadcasting signal and a predetermined broadcasting signal from said distribution network; and
a subscriber network, connected to said distribution node and including at least one subscriber, for distributing the broadcasting signal selected by said distribution node.

35. A subscriber equipment connected to a broadcasting communication system for receiving a broadcasting signal, the broadcasting communication system comprising:
a collection network for collecting broadcasting signals transmitted from a plurality of broadcasting stations;
a distribution network for distributing the broadcasting signals collected by said collection network;
a distribution node for selecting and transmitting one of a subscriber requested broadcasting signal and a predetermined broadcasting signal from said distribution network; and
a subscriber network, connected to said distribution node and including at least one subscriber, for distributing the broadcasting signal selected by said distribution node.

36. A collection network for collecting broadcasting signals transmitted from a plurality of broadcasting stations, wherein:
said collection network is connected to a distribution network for distributing the broadcasting signals collected by said collection network;
said distribution network is connected to a distribution node for selecting and transmitting one of a subscriber requested broadcasting signal and a predetermined broadcasting signal from said distribution network; and
said distribution node is connected to a subscriber network, including at least one subscriber, for distributing the broadcasting signal selected by said distribution node.

37. A distribution network connected to a collection network for collecting broadcasting signals transmitted from a plurality of broadcasting stations for distributing the broadcasting signals, wherein:
said distribution network is connected to a distribution node for selecting and transmitting one of a subscriber requested broadcasting signal and a predetermined broadcasting signal from said distribution network; and
said distribution node is connected to a subscriber network, including at least one subscriber, for distributing the broadcasting signal selected by said distribution node.

38. A distribution node connected to a distribution network, which is connected to a collection network for collecting broadcasting signals transmitted from a plurality of broadcasting stations, for distributing the broadcasting signals and for selecting and transmitting one of a subscriber requested broadcasting signal and a predetermined broadcasting signal from said distribution network, wherein said distribution node is connected to a subscriber network, including at least one subscriber, for distributing the broadcasting signal selected by said distribution node.

39. A subscriber network connected to a distribution node for selecting and transmitting one of a subscriber requested broadcasting signal and a predetermined broadcasting signal from a distribution network, said distribution node being connected to a distribution network for distributing a plurality of broadcasting signals, and said distribution network being connected to a collection network for collecting transmitting signals transmitted from a plurality of broadcasting stations, wherein said subscriber network includes at least one subscriber, and distributes the broadcasting signal selected by said distribution node.
